# EUROPÄISCHE PATENTSCHRIFT

(11) **EP 1 727 853 B1**
(45) Veröffentlichungstag und Bekanntmachung des Hinweises auf die Patenterteilung: **03.08.2011**
(21) Anmeldenummer: 05715776.0
(22) Anmeldetag: 07.03.2005
(51) Int. Cl.: C08J 3/03, C08F 2/10, C08F 2/20, C08F 20/36, C08F 20/54, C08F 20/56, D21H 21/10

(54) **ANIONISCHE WASSER-IN-WASSER-POLYMERDISPERSIONEN, VERFAHREN ZU DEREN HERSTELLUNG SOWIE DEREN VERWENDUNG**
ANIONIC WATER-IN-WATER POLYMER DISPERSIONS, METHOD FOR THE PRODUCTION THEREOF AND THEIR USE
DISPERSIONS POLYMERES ANIONIQUES EAU DANS L'EAU, PROCEDE DE PRODUCTION CORRESPONDANT ET UTILISATION

(30) Priorität: 18.03.2004 DE 102004013750
(43) Veröffentlichungstag der Anmeldung: 06.12.2006
(73) Patentinhaber: Ashland Licensing and Intellectual Property LLC, Dublin, OH 43017 (US)
(72) Erfinder: BELLMANN, Susanne, 40878 Ratingen (DE); STEINER, Norbert, 63755 Alzenau (DE); BUSCH, Michael, 41238 Mönchengladbach (DE); STEUCK, Dev, 25489 Haselau (DE); SCHULTE, Johann, 47803 Krefeld (DE); WÖBEL, Wolfgang, 47877 Willich (DE)
(74) Vertreter: Bülle, Jan
(86) Internationale Anmeldenummer: PCT/EP2005/002358
(87) Internationale Veröffentlichungsnummer: WO 2005/092954

(56) Entgegenhaltungen:
- EP-A- 0 664 302
- WO-A-02/46275
- US-B1- 6 265 477
- US-B1- 6 331 229

## Beschreibung

Die vorliegende Erfindung betrifft Verfahren zur Herstellung von anionischen Wasser-in-Wasser-Polymerdispersionen, die mindestens ein feinverteiltes, wasserlösliches und/oder wasserquellbares Polymerisat A und eine kontinuierliche wäßrige Phase enthalten, die mindestens ein polymeres Dispergiermittel B aufweisen, die dadurch erhältlichen Wasser-in-Wasser-Polymerdispersionen und deren Verwendung als Hilfsmittel bei der Papierherstellung und/oder als Flockungsmittel bei der Sedimentation von Feststoffen.

Eines der Grundprobleme bei der Anwendung wasserlöslicher polymerer Flockungsmittel ist, wie man dieses polymere Flockungsmittel in adäquater Weise in Wasser lösen kann, so daß es für den beabsichtigten Einsatzzweck verwendet werden kann.

So wurden schon sehr früh wasserlösliche Polymere als verdünnte wässrige Lösungen bereitgestellt. In den frühen 70 iger Jahren wurden Wasser-in Öl-Emulsionen eingeführt. Unter Verwendung der Wasser-in Öl-Technologie konnten hochmolekulare Polymere, die sich sehr schnell in Wasser iösten, hergestellt werden, so daß diese Technologie bei den Herstellern wasserlöslicher Polymere eine große Akzeptanz fand. Nachteilig an dieser Wasser-in ÖI-Technologie war jedoch, daß diese Emulsionen substantielle Mengen an Kohlenwasserstofflüssigkeit in Form von Ölen enthielten, deren Einbringen in Systemen, in denen wasserlösliche Polymere üblicherweise verwendet werden, nur bedingt möglich war.

Eine weitere Entwicklung wasserlöslicher polymerer Flockungsmittel waren Verfahren zur Herstellung von Dispersionen wasserlöslicher kationischer Polymere. Diese Polymere wurden in einem wäßrigen Salz oder einer Salzlösung hergestellt, in der das Polymer unlöslich war. Nachteilig an solchen wie z.B. in der US 4 929 655 und 5 006 590 beschriebenen Herstellungsverfahren ist, daß diese Verfahren praktisch auf die Herstellung von Dispersionen kationisch geladener wasserlöslicher Polymere beschränkt ist, die mindestens einen Anteil an einem hydrophobischen modifizierten kationischen Monomer aufweisen.

Demgegenüber können diese Verfahren nicht ohne weiteres auf die Herstellung anionisch geladener wasserlöslicher Polymere übertragen werden, die üblicherweise als Flockungsmittel und als Entwässerungsmittel und Retentionshilfen in der Papierindustrie zum Einsatz kommen.

In der US 5 837 776 wird ein Verfahren zur Herstellung wasserlösliche anionischer Dispersionspolymeren beschrieben, durch das wässrige Dispersionen von wasserlöslichen nichtionisch und anionisch geladenen Vinyl- und Allyl-Additionspolymeren durch Polymerisation in Gegenwart eines anionisch geladenen wasserlöslichen polymeren Stabilisierungsmittels in einer gesättigten Salzlösung bei einem pH-Wert von 2 bis 5 erhalten werden. Der Salzgehalt dieser Dispersionen beträgt 5 bis 40 Gew.-%, bezogen auf das Gesamtgewicht der Dispersion, wobei der Anteil des Stabilisierungsmittels 0,1 bis 5 Gew.-%, bezogen auf das Gesamtgewicht der Dispersion, beträgt. Diese polymeren anionisch geladenen Stabilisierungsmittel weisen ein Molekulargewicht von 100 000 bis 5 00 000 auf und sind bevorzugt Polymere und Copolymere von Acrylamidomethylpropansulfonsäure (AMPS), das zu mindestens 20 Mol-% in den Polymeren enthalten ist.

Die US 6 265 477 beschreibt eine wässrige Dispersion eines dispersen hochmolekulren wasserlöslichen anionischen oder nichtionischen Polymers, das durch Polymerisation mindestens eines anionischen und nichtionischen Monomeren in Gegenwart eines anionisch geladenen wasserlöslichen polymeren Stabilisierungsmittels, das von 1,25 bis 20 Mol-% Acrylamidomethylpropansulfonsäure enthält und ein Molekulargewicht von 100 000 bis 5 00 000 aufweist, in einer wässrigen Lösung eines wasserlöslichen Salzes bei einem pH-Wert größer 5 erhalten wird, wobei der Salzgehalt dieser Dispersionen 5 bis 40 Gew.-% beträgt. US 6 331 229 beschreibt die Zügabe eines hochmolekülaren wasserlöslichen anionischen oder nicht-ionischen Polymers zü cellülosehaltigem Material für die Papierherstellung. Um besser handhabbare Wasser-in-Wasser-Dispersionen zu erhalten, ist die Herstellung von kationischen Wasser-in-Wasser-Polymerdispersionen im Stande der Technik wiederholt beschrieben worden. Beispielhaft ist hier auf die Patentschriften WO 98114405, WO 98/31748, WO 98/31749 sowie die EP-A-0 630 909 hinzuweisen, Nachteilig an diesen Wasser-in-Wasser-Polymerdispersionen ist, daß sie über 25°C bis zu 50°C, Veränderungen unterworfen sind, die eine Beeinträchtigung der vorteilhaften Eigenschaften der Wasser-in-Wasser-Dispersionen zur Folge haben und beispielsweise zu verlängerten Entwässerungszeiten führen können. Demgegenüber weisen die nach dem in der DE-A-100 61 483 beschriebenen Verfahren hergestellten Wasser-in-Wasser-Polymerdispersionen auch nach einer Lagerung unter extremen Bedingungen, wie Temperaturen über 25°C bis zu 50°C, praktisch unveränderte Gebrauchselgenschaften auf. Die Herstellung dieser Wasser-In-Wasser-Polymerdispersionen erfolgt dabei in der Weise, daß Monomere, die in einer wäßrigen Phase verteilt sind, die das wasserlösliche Dispergiermittel B enthalten, gegebenenfalls unter Zugabe eines wasserlösliche Salzes einer radikalischen Polymerisation unterworfen werden und nach der Polymerisation der so erhaltenen Wasser-in-Wasser-Dispersion eine wasserlösliche Säure zugesetzt wird. Die Säure wird hierbei in Mengen von 0,1 - 5 Gew.-% und das Salz in Mengen bis maximal 3 Gew.-%, jeweils bezogen auf die Gesamidispersion zugesetzt, wobei die Säure und das Salz insgesamt in Mengen von maximal 5 Gew.-%, bezogen auf die Gesamtdispersion, zugesetzt werden.

Es besteht jedoch noch immer ein Bedürfnis nach stabilen hochmolekularen Wasser-in-Wasser-Polymerdispersionen, bei denen es sich um handhabbare, direkt dosierbare, lagerstabile Dispersionen handelt, die ohne Mineralöl auskommen und nur geringe Mengen bzw. kein Salz enthalten, die vorteilhaft zur Fest-Flüssigtrennung in den unterschiedlichsten Anwendungsgebieten eingesetzt werden können, insbesondere als Flockungsmittel bzw. Flockungshilfsmittel zur Sedimentation, Filtration und Flotation, vorzugsweise in der Papierindustrie.

Aufgabe der vorliegenden Erfindung war es daher, ein solches Verfahren zur Verfügung zu stellen, gemäß dem anionische Wasser-in-Wasser-Polymerdispersionen erhalten werden, die auch nach einer Lagerung praktisch unveränderte Gebrauchseigenschaften aufweisen und auch im alkalischen Milieu eine hinreichende Hydrolysestabilität besitzen und insbesondere in der Papiermittelindustrie in den verschiedensten Retentionsmittelsystemen Anwendung finden können.

Die Aufgabe wird erfindungsgemäß durch folgendes Verfahren gelöst:
Verfahren zur Herstellung von anionischen Wasser-in-Wasser-Polymerdispersionen, die wenigstens ein feinverteiltes, hochmolekulares wasserlösliches und/oder wasserquellbares Polymerisat A und eine kontinuierliche wässrige Phase enthalten, wobei diese Phase eine Teilmenge von wenigstens 5 Gew.-%, bezogen auf die Gesamtdispersion, eines niedermolekularen polymeren Dispergiermittels B aufweist;
wobei Monomere bzw. deren wässrige Lösung in einer Menge von 5 bis 30 Gew.-%, bezogen auf die Gesamtlösung bzw. auf die resultierende Gesamtdispersion, in der wässrigen Phase, welche die Teilmenge des polymeren Dispergiermittels B enthält, verteilt und einer radikalischen Polymerisation unterworfen werden; und nach Beendigung der Polymerisation die Reaktionsmischung mit der Restmenge des polymeren Dispergiermittels B nachverdünnt wird,
wobei
   - das Polymerisat A ein durchschnittliches Molekulargewicht M_{w} von > 1,0 × 10⁶ g/mol, gemessen nach der GPC-Methode, aufweist; und
   - das polymere Dispergiermittel B ein durchschnittliches Molekulargewicht M_{w} von maximal 250.000 g/mol, gemessen nach der GPC-Methode, aufweist;
   mit der Maßgabe, dass sofern ein Salz bei der Herstellung der Wasser-in-Wasser-Polymerdispersion zum Einsatz kommt, dieses Salz in Mengen bis zu maximal 3,0 Gew.-%, bezogen auf die Gesamtdispersion, zugesetzt wird.

Unter "anionischer" Wasser-in-Wasser-Polymerdispersion wird erfindungsgemäß eine Wasser-in-Wasser-Polymerdispersion verstanden, deren Gesamtladung negativ ist.

Zur Herstellung der erfindungsgemäßen Wasser-in-Wasser-Polymerdispersionen werden die Monomeren, die radikalisch polymerisiert werden sollen, vorzugsweise als wässrige Monomerlösung, in einer wässrigen Phase fein verteilt, die eine Teilmenge wenigstens eines polymeren Dispergiermittels B enthält.

Erfindungsgemäß sind diese polymeren Dispergiermittel relativ niedermolekular und weisen ein durchschnittliches Molekulargewicht M_{w} von maximal 250 000, insbesondere von 25 000 bis 250 000 g/mol, bevorzugt 50 000 bis 100 000 und ganz besonders bevorzugt 65 000 g/mol, gemessen nach der GPC-Methode (Gelpermeationschromatographie mit 1,5%iger Ameisensäure als Elutionsmittel gegen Pullulan-Standards), auf.

Weiterhin weisen diese polymeren Dispergiermittel wenigstens eine der funktionellen Gruppen ausgewählt aus Ether-, Carboxyl-, Sulfon-, Sulfatester-, Amino-, Amido-, Imido-, tert.-Amino- und/oder quaternären Ammoniumgruppen auf.

Beispielhaft sind hierfür Cellulosederivate, Polyvinylacetate, Stärke, Stärkederivate, Dextrane, Polyvinylpyrrolidone, Polyvinylpyridine, Polyethylenimine, Polyamine, Polyvinylimidazole, Polyvinylsuccinimide, Polyvinyl-2-methylsuccinimide, Polyvinyl-1,3-oxazolidon-2e, Polyvinyl-2-methylimidazoline und/oder deren jeweilige Copolymerisate mit Maleinsäure, Maleinsäureanhydrid, Fumarsäure, Itaconsäure, Itaconsäureanhydrid, (Meth)acrylsäure, Salze und/oder Ester der (Meth)acrylsäure und/oder (Meth)acrylsäureamid-Verbindungen, zu erwähnen.

Vorzugsweise werden als polymere Dispergiermittel B anionische Polymerisate eingesetzt, die aus wenigstens 30 Gew.-%, vorzugsweise wenigstens 50 Gew.-%, besonders bevorzugt 100 Gew.-% anionischen Monomereinheiten aufgebaut sind, die sich von anionischen Monomeren ableiten, wie z. B.
■ olefinisch ungesättigte Carbonsäuren und Carbonsäureanhydride, insbesondere Acrylsäure, Methacrylsäure, Itaconsäure, Crotonsäure, Glutaconsäure, Maleinsäure und Maleinanhydrid, Fumarsäure sowie die wasserlöslichen Alkali-, Erdalkali- und Ammoniumsalze derselben
■ olefinisch ungesättigte Sulfonsäuren, insbesondere aliphatische und/oder aromatische Vinylsulfonsäuren, beispielsweise Vinylsulfonsäure, Allylsulfonsäure, Styrolsulfonsäure, Acryl- und Methacrylsulfonsäuren, insbesondere Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure sowie die wasserlöslichen Alkali-, Erdalkali- und Ammoniumsalze derselben
■ olefinisch ungesättigte Phosphonsäuren, insbesondere z.B. Vinyl- und Allylphosphonsäure sowie die wasserlöslichen Alkali-, Erdalkali- und Ammoniumsalze derselben
■ sulfomethylierte und/oder phosphonomethylierte Acrylamide sowie die wasserlöslichen Alkali-, Erdalkali- und Ammoniumsalze derselben.

Vorzugsweise werden als polymere Dispergiermittel B die wasserlöslichen Alkalisalze der Acrylsäure eingesetzt, wobei Polykaliumacrylate erfindungsgemäß besonders bevorzugt sind.

Für das erfindungsgemäße Verfahren ist es erfindungswesentlich, daß zunächst lediglich eine Teilmenge des polymeren Dispergiermittels B eingesetzt wird, vorzugsweise 60 bis 95 Gew.-%, bezogen auf die Gesamtmenge Dispergiermittel, während die Restmenge des Dispergiermittels B nach Beendigung der Polymerisation und Abkühlung der Reaktionsmischung B zur Nachverdünnung zugesetzt wird. Eine Teilmenge unter 5 Gew.-%, bezogen auf die Gesamtdispersion, ist nicht ausreichend, um die erfindungsgemäßen anionischen Wasser-in-Wasser-Polymerdispersionen zu erhalten.

In einer Ausführungsform des erfindungsgemäßen Verfahrens wird wenigstens ein wasserlösliches, polymeres Dispergiermittel B zusammen mit einem wasserlöslichen polyfunktionellen Alkohol und/oder dessen Umsetzungsprodukt mit Fettaminen eingesetzt. Dabei eignen sich insbesondere Polyalkylenglykole, vorzugsweise Polyethylenglykole, Polypropylenglykole, Blockcopolymere von Propylen/Ethylenoxid, mit Molekulargewichten von 50 bis 50 000, vorzugsweise 1 500 bis 30 000, niedermolekulare polyfunktionelle Alkohole wie Glycerin, Ethylenglykol, Propylenglykol, Pentaerythrit und/oder Sorbitol als polyfunktionelle wasserlösliche Alkohole und/oder deren Umsetzungsprodukten mit Fettaminen mit C₆-C₂₂ im Alkyl- oder Alkylenrest.

Die wässrige Phase, in der die Monomeren, vorzugsweise als wässrige Lösung, verteilt werden, muß eine ausreichende Teilmenge wasserlösliches polymeres Dispergiermittel B und ggf. polyfunktionellen Alkohol und/oder das genannte Umsetzungsprodukt enthalten, damit das sich während der Polymerisation bildende Polymerisat A verteilt bleibt, ein unkontrolliertes Wachsen der Polymerteilchen und/oder ein Agglomerieren der sich bildenden Polymerteilchen verhindert wird.

Vorzugsweise wird das polymere Dispergiermittel B und die ggf. vorhandenen weiteren Dispersionsmittelkomponenten in Mengen von 5 bis 50 Gew.-%, vorzugsweise von 5 bis 30 Gew.-%, besonders bevorzugt von 5 bis 15 Gew.-% , bezogen auf die Gesamtdispersion, eingesetzt.

Bei Mitverwendung weiterer wasserlöslicher Dispersionsmittelkomponenten mit dem polymeren Dispergiermittel B sollte ein Gewichtsverhältnis des polymeren-Dispergiermittels B zu diesen Komponenten im Bereich von 1,00 : 0,01 liegen. Insbesondere sollte ein Gewichtsverhältnis von 1,00 : 0,01 bis 1,00 : 0,50, vorzugsweise 1,00 : 0,01 bis 1,00 : 0,30 eingehalten werden.

Die Monomeren, die in der das polymere Dispergiermittel B enthaltenen wässrigen Phase, vorzugsweise fein und homogen verteilt vorliegen, können anionische, nichtionische, amphiphile ethylenisch ungesättigte, aber auch kationische Monomere umfassen. Hierbei ist insbesondere bei Verwendung von kationischen Monomeren deren Anteil so zu wählen, daß die Gesamtladung der nach dem erfindungsgemäßen Verfahren hergestellten Wasser-in-Wasser-Polymerdispersionen negativ ist. Darüberhinaus wird bei einem ggf. vorhandenen Anteil an wasserunlöslichen Monomeren dieser so gewählt, daß die Wasserlöslichkeit bzw. die Wasserquellbarkeit des nach der Polymerisation erhaltenen Polymerisats A nicht beeinträchtigt wird.

Als anionische Monomere können erfindungsgemäß beispielhaft nachfolgend aufgeführte Monomere verwendet bzw. ausgewählt werden:
a.) olefinisch ungesättigte Carbonsäuren und Carbonsäureanhydride, insbesondere Acrylsäure, Methacrylsäure, Itaconsäure, Crotonsäure, Glutaconsäure, Maleinsäure, Maleinanhydrid, Fumarsäure sowie die wasserlöslichen Alkali-, Erdalkali- und Ammoniumsalze derselben
b.) olefinisch ungesättigte Sulfonsäuren, insbesondere aliphatische und/oder aromatische Vinylsulfonsäuren, beispielsweise Vinylsulfonsäure, Allylsulfonsäure, Styrolsulfonsäure, Acryl- und Methacrylsulfonsäuren, insbesondere Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure sowie die wasserlöslichen Alkali-, Erdalkali- und Ammoniumsalze derselben
c.) olefinisch ungesättigte Phosphonsäuren, insbesondere z.B. Vinyl- und Allylphosphonsäure sowie die wasserlöslichen Alkali-, Erdalkali- und Ammoniumsalze derselben
d.) sulfomethylierte und/oder phosphonomethylierte Acrylamide sowie die wasserlöslichen Alkali-, Erdalkali- und Ammoniumsalze derselben.

Vorzugsweise werden olefinisch ungesättigte Carbonsäuren und Carbonsäureanhydride, insbesondere Acrylsäure, Methacrylsäure, Itaconsäure, Crotonsäure, Glutaconsäure, Maleinsäure, Maleinanhydrid, Fumarsäure sowie die wasserlöslichen Alkali-, Erdalkali- und Ammoniumsalze derselben als anionische Monomere eingesetzt, wobei die wasserlöslichen Alkalisalze der Acrylsäure, insbesondere deren Natrium- und Kaliumsalze sowie deren Ammoniumsalze besonders bevorzugt sind.

Bei Verwendung von 2-Acrylamido-2-methylpropansulfonsäure (AMPS) als anionischem Monomer bzw. deren wasserlösliche Alkali-, Erdalkali- und Ammoniumsalze ist zu beachten, daß je höher der Anteil an 2-Acrylamido-2-methylpropansulfonsäure sowie deren Salzen in der hochmolekularen Phase ist, d.h. Polymerisat A ist, desto pastöser wird die erfindungsgemäße Dispersion, wobei AMPS-Mengen jenseits der 2 Gew. % bei Lagerung bei höheren Temperaturen zur Nachdickung der Dispersion führen können.

Nichtionische Monomere zur Herstellung der Polymerisate A sind beispielsweise Verbindungen der allgemeinen Formel (I) 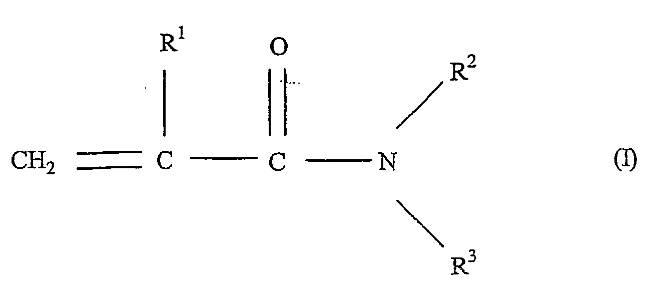 in der
- R¹: für einen Wasserstoff oder einen Methylrest, und
- R² und R³: unabhängig voneinander, für Wasserstoff, für Alkyl- oder Hydroxyalkyl- rest mit 1 bis 5 C-Atomen, und
- R² oder R³: für eine OH-Gruppe
stehen, eingesetzt werden.

Vorzugsweise werden (Meth)acrylamid, N-Methyl(meth)acrylamid, N-, Isopropyl(meth)acrylamid oder N,N-substituierte (Meth)acrylamide, wie N,N-Dimethyl(meth)acrylamid, N,N-Diethyl(meth)acrylamid, N-Methyl-N-ethyl(meth)acrylamid oder N-Hydroxyethyl(meth)acrylamid, eingesetzt.

Erfindungsgemäß vorteilhaft können als nichtionische Monomere, insbesondere die wasserlöslichen bzw. wasserdispergierbaren Derivate der Acryl- und Methacrylsäure wie z.B. Acrylamid, Methacrylamid sowie n-alkylsubstituierte Acrylamide eingesetzt werden, wobei erfindungsgemäß Acrylamid als nichtionisches Monomer ganz besonders bevorzugt ist.

Als amphiphile Monomere eignen sich Verbindungen der allgemeinen Formel (II) oder (III) 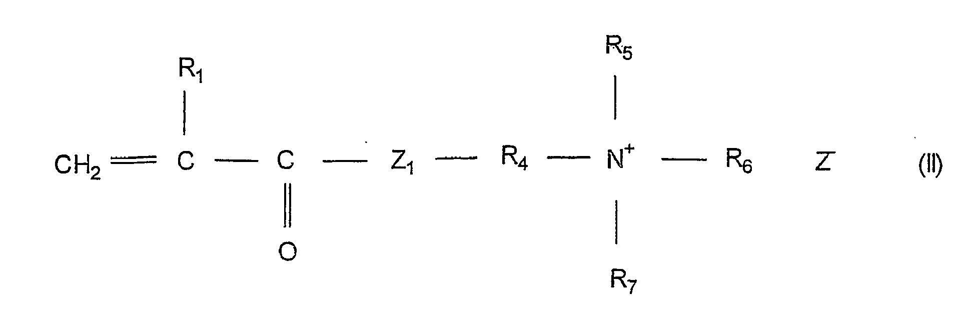 wobei
- Z₁: für O, NH, NR₄ mit R₄ für Alkyl mit 1 bis 4 Kohlenstoffatomen,
- R₁: für Wasserstoff oder einen Methylrest,
- R₄: für Alkylen mit 1 bis 6 Kohlenstoffatomen,
- R₅ und R₆: unabhängig voneinander, für einen Alkylrest mit 1 bis 6 Kohlenstoffato- men,
- R₇: für einen Alkyl-, Aryl- und/oder Aralkyl-Rest mit 8 bis 32 Kohlenstoffato- men und
- Z⁻: für Halogen, Pseudohalogen, SO₄CH₃⁻ oder Acetat stehen oder 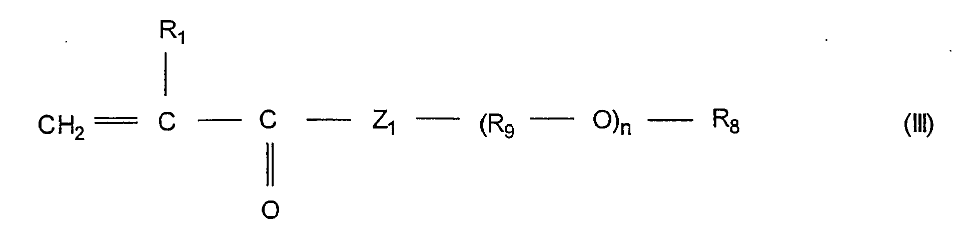
wobei
- Z₁: für O, NH, NR₄ mit R₄ für Alkyl mit 1 bis 4 Kohlenstoffatomen,
- R₁: für Wasserstoff oder einen Methylrest,
- R₈: für Wasserstoff, einen Alkyl-, Aryl- und/oder Aralkyl-Rest mit 8 bis 32 Kohlenstoffatomen,
- R₉: für einen Alkylenrest mit 2 bis 6 Kohlenstoffatomen
- n: für eine ganze Zahl von 1 und 50
stehen, eingesetzt werden.

Vorzugsweise sind dies Umsetzungsprodukte von (Meth)acrylsäure mit Polyethylenglykolen (10 bis 40 Ethylenoxideinheiten), die mit Fettalkohol verethert sind, bzw. die entsprechenden Umsetzungsprodukte mit (Meth)acrylamid.

Als gegebenenfalls ebenfalls einsetzbare kationische Monomere zur Herstellung der Polymerisate A, deren Einsatz unter der Prämisse erfolgt, daß die Gesamtladung der nach dem erfindungsgemäßen Verfahren hergestellten Wasser-in-Wasser-Polymerdispersionen negativ ist, eignen sich Verbindungen der allgemeinen Formel (IV) 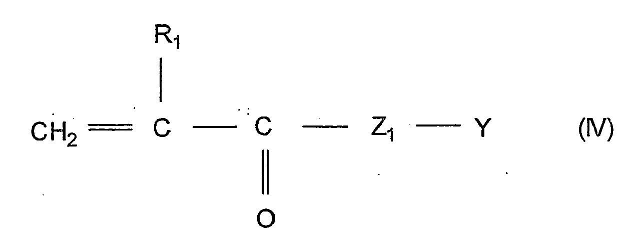 in der
- R₁: für Wasserstoff oder einen Methylrest,
- Z₁: für O, NH oder NR₄ mit R₄ für einen Alkylrest mit 1 bis 4 C-Atomen,
- Y: für eine der Gruppen 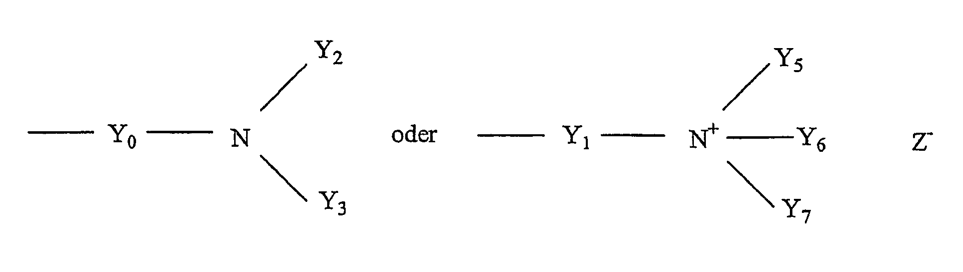
stehen, wobei
Y₀ und Y₁ für einen Alkylenrest oder Hydroxyalkylenrest mit 2 bis 6 C-Atomen,
Y₂, Y₃, Y₄, Y₅, Y₆, Y₇, unabhängig voneinander, für einen Alkylrest mit 1 bis 6 C-Atomen,
Z⁻ für Halogen, Acetat, SO₄CH₃⁻ stehen.

Vorzugsweise sind als protonierte oder quaternierte Dialkylaminoalkyl(meth)acrylate oder -(meth)acrylamide mit C₁ bis C₃ in den Alkyl- bzw. Alkylengruppen, besonders bevorzugt das mit Methylchlorid quaternierte Ammoniumsalz von Dimethylaminoethyl(meth)acrylat, Dimethylaminopropyl(meth)acrylat, Dimethylaminoethyl(meth)acrylat, Diethylaminoethyl(meth)acrylat, Dimethylaminomethyl(meth)acrylat, Dimethylaminoethyl(meth)acrylamid und/ oder Dimethylaminopropyl-(meth)acrylamid geeignet.

Zur Herstellung des Polymerisates A wird eine Monomerzusammensetzung gewählt, die aus 0 bis 100 Gew.-%, vorzugsweise aus 5 bis 70 Gew.-%, besonders bevorzugt 5 bis 40 Gew.-%, jeweils bezogen auf die Gesamtmenge an Monomeren, anionischer Monomeren besteht. Ganz besonders bevorzugt wird zur Herstellung des Polymerisates A eine Mischung aus nichtionischen Monomeren, vorzugsweise Acrylamid und anionischen Monomeren, insbesondere olefinisch ungesättigte Carbonsäuren und Carbonsäureanhydride, vorzugsweise Acrylsäure, Methacrylsäure, Itaconsäure, Crotonsäure, Glutaconsäure, Maleinsäure, Maleinanhydrid, Fumarsäure sowie die wasserlöslichen Alkali-, Erdalkali- und Ammoniumsalze derselben eingesetzt, wobei Acrylsäure als anionisches Monomer besonders bevorzugt ist.

Bevorzugt ist auch eine Mischung von Acrylsäure mit Alkyl(meth)acrylaten und/oder Alkyl(meth)amiden.

Bei solchen Monomerzusammensetzungen beträgt der Anteil an anionischen Monomeren vorzugsweise wenigstens 5 Gew.-%.

Die Monomeren bzw. deren wässrige Lösung werden in einer Menge von 5 bis 30 Gew.-% , vorzugsweise 10 bis 30 Gew.-%, bezogen auf die Gesamtlösung bzw. auf die resultierende Gesamtdispersion, in der wässrigen Phase, die die Teilmenge wenigstens eines Dispergiermittels B enthält, verteilt. Beispielsweise weist eine wässrige Monomerlösung eine Konzentration von 5 bis 60 Gew.-%, vorzugsweise 10 bis 50 Gew.-%, bezogen auf die gesamte wässrige Monomerlösung auf. Aus den Monomeren wird anschließend durch Polymerisation das hochmolekulare Polymerisat A gebildet.

Die nach dem erfindungsgemäßen Verfahren hergestellten Polymerisate A sind hochmolekulare, aber dennoch wasserlösliche bzw. wasserquellbare Polymerisate mit einem durchschnittlichen Molekulargewicht M_{w}, gemessen nach der GPC-Methode, von > 1,0 x 10⁶ g/mol, wobei das durchschnittliche Molekulargewicht M_{w} des Polymerisats A immer größer als das des polymeren Dispergiermittels B ist.

Das polymere Dispergiermittel B und das Polymerisat A sind jedoch unterschiedlich, wobei der Unterschied eine Folge der jeweiligen physikalischen Größen, insbesondere der unterschiedlichen Molekulargewichte und/oder des chemischen Aufbaus, z.B. durch eine unterschiedliche Monomerzusammensetzung, ist.

Erfindungsgemäß bevorzugte Wasser-in-Wasser-Polymerdispersionen enthalten als Dispergiermittel ein Kalium- oder Natriumacrylat mit einem Molekulargewicht von ca. 65.000 g/mol (mittels Gelpermeationschromatographie ermittelt) bzw. als Monomerbausteine für die hochmolekulare Phase, d.h. Polymerisat A werden Acrylamid (80 Gew.-%), Kalium-, Ammonium- oder Natriumacrylat (20 Gew.-%) eingesetzt.

Nach dem erfindungsgemäßen Verfahren kann die Polymerisation optional in Gegenwart eines wasserlöslichen Salzes durchgeführt werden. Wenn der Zusatz wasserlöslicher Salze beabsichtigt ist, können insbesondere Ammonium-, Alkalimetall- und/oder Erdalkalimetallsalze, vorzugsweise Ammonium-, Natrium-, Kalium-, Calcium- und/oder Magnesiumsalze eingesetzt werden. Solche Salze können Salze einer anorganischen Säure oder einer organischen Säure, vorzugsweise einer organischen Carbonsäure, Sulfonsäure, Phosphonsäure oder einer Mineralsäure sein. Bevorzugt sind die wasserlöslichen Salze von aliphatischen oder aromatischen Mono-, Di-, Polycarbonsäuren, Hydroxycarbonsäuren, insbesondere der Essigsäure, Propionsäure, Zitronensäure, Oxalsäure, Bernsteinsäure, Malonsäure, Adipinsäure, Fumarsäure, Maleinsäure und Benzoesäure oder Schwefelsäure, Salzsäure oder Phosphorsäure. Besonders bevorzugt kommen als wasserlösliche Salze Natriumchlorid, Ammoniumsulfat und/oder Natriumsulfat zum Einsatz.

Die Zugabe des Salzes zu dem System kann vor der Polymerisation, während der Polymerisation oder nach der Polymerisation erfolgen. Bevorzugt ist die Zugabe des Salzes vor der Polymerisation der Monomeren.

Sofern ein Salz bei der Herstellung der Wasser-in-Wasser-Polymerdispersion zum Einsatz kommt, wird dieses Salz in Mengen bis maximal 3,0 Gew.-%, vorzugsweise in Mengen von 0,5 bis 2,5 Gew.-%, besonders bevorzugt in Mengen von 0,75 bis 2,0 Gew.-%, jeweils bezogen auf die Gesamtdispersion, zugesetzt.

Zur Durchführung des erfindungsgemäßen Verfahrens wird die kontinuierliche wässrige Phase durch Auflösen oder Verdünnen der Teilmenge des polymeren Dispergiermittels B, ggf. polyfunktionellem Alkohol und/oder einem entsprechenden Umsetzungsprodukt mit Fettaminen in Wasser und durch Verteilen der Monomeren bzw. deren wässrige Lösung nach bekannten Verteilungsmethoden, vorzugsweise durch Rühren, hergestellt.

Die Monomeren des Polymerisats A können als solche direkt oder vorzugsweise als wässrige Monomerlösung in die kontinuierliche wässrige Phase eingebracht werden.

Die Monomerlösung enthält im allgemeinen 5 bis 80 Gew.-%, vorzugsweise 10 bis 50 Gew.-%, bezogen auf die Gesamtlösung, Monomere und der restliche Anteil ist Wasser mit darin ggf. enthaltenen Hilfsstoffen, wie z.B. Chelatbildner. Zum Starten der Polymerisation werden beispielsweise radikalische Initiatoren, sogenannte Polymerisationsinitiatoren verwendet. Bevorzugt werden als radikalische Initiatoren Azoverbindungen, wie z. B. 2,2-Azobiisobutyronitril, 2,2-Azobis(2-aminopropan)dihydrochlorid oder vorzugsweise Kaliumpersulfat, Ammoniumpersulfat, Wasserstoffperoxid, ggf. in Kombination mit einem Reduktionsmittel, wie z. B. einem Amin oder Natriumsulfit, eingesetzt. Die Initiatormenge, bezogen auf die zu polymerisierenden Monomeren, liegt im allgemeinen bei 10⁻³ bis 1 Gew.-%, vorzugsweise 10⁻² bis 0,1 Gew.-%. Die Initiatoren können zu Beginn der Polymerisation vollständig oder auch nur teilweise mit einer anschließenden Dosierung der Restmenge über den gesamten Polymerisationsverlauf zugegeben werden. Ebenso können die Monomeren oder die Monomerlösung vollständig oder teilweise am Beginn der Polymerisation in der Teilmenge des Dispergiermittel B verteilt werden, wobei der Rest der Monomeren oder der Monomerenlösung in dosierten Teilmengen oder als kontinuierlicher Zulauf unter Verteilung über den gesamten Polymerisationsverlauf zugegeben wird. Darüber hinaus ist es auch möglich, die Herstellung der Wasser-in-Wasser-Dispersionen gemäß Verfahren der EP-A-0 664 302 durchzuführen, deren entsprechende Offenbarung hiermit als Referenz eingeführt wird. Im wesentlichen wird bei dieser Verfahrensweise Wasser während der Polymerisation abgezogen und ggf. polymeres Dispergiermittel B zugegeben.

Die Polymerisationstemperatur beträgt im allgemeinen 0 bis 120°C, bevorzugt 30 bis 90°C. Vorzugsweise wird die Polymerisation so durchgeführt, daß das System mit Inertgas gespült und unter einer Inertgasatmosphäre, z. B. unter Stickstoffatmosphäre, polymerisiert wird. Der Polymerisationsumsatz bzw. das Ende der Polymerisation kann in einfacher Art und Weise durch Bestimmung des Restmonomergehaltes festgestellt werden. Die Methoden hierfür sind dem Fachmann bekannt.

Nach der Polymerisation wird erfindungsgemäß das Reaktionsgemisch mit der Restmenge des Dispergiermittels B nachverdünnt. Es ist vorteilhaft, die Reaktionsmischung abzukühlen, vorzugsweise auf ≤ 35 °C und mit 5 bis 50, bevorzugt 10 bis 40 Gew.-%, ganz besonders bevorzugt 20 bis 35 Gew.-%, bezogen auf die Gesamtmenge des Dispergiermittels B, nachzuverdünnen. Der Verfahrensschritt der Nachverdünnung ist zwingend erforderlich, da sonst die erfindungsgemäßen anionischen Wasser-in-Wasser-Polymerdispersionen nicht erhältlich wären.

Die erfindungsgemäß erhältlichen Wasser-in-Wasser-Polymerdispersionen bzw. das Verfahren zu ihrer Herstellung sind eine vorteilhafte Alternative zu den bekannten anionischen, hochmolekularen Polyacrylamid/Polyacrylat-Copolymeren, die entweder als Granulat oder als flüssige Wasser-in-Öl-Emulsionen hergestellt werden. Die Wasser-in-Wasser-Polymerdispersionen stellen ein hochkonzentriertes, wirksames flüssiges System ohne Mineralöl oder Tensid dar, das eine gute Lagerstabilität auch bei höheren Umgebungstemperaturen aufweist und darüberhinaus nicht entflammbar ist. Es hat keinen flüchtigen organischen Anteil (VOC) und der chemische bzw. biologische Sauerstoffbedarf ist im Vergleich zu den entsprechenden Emulsionen äußerst niedrig.

Die erfindungsgemäßen Produkte haben eine hervorragende Löslichkeit in Wasser und eignen sich auch unverdünnt zur direkten Dosierung in der Anwendung.

Aufgrund dieser Eigenschaften, insbesondere der Tatsache, daß es sich bei den erfindungsgemäßen Wasser-in-Wasser-Polymerdispersionen gut handhabbare, direkt dosierbare, lagerstabile Dispersionen handelt, die ohne Mineralöl auskommen und nur geringe Mengen bzw. kein Salz enthalten, können sie vorteilhaft zur Fest-Flüssigtrennung, vorzugsweise in wässrigen Systemen in den unterschiedlichsten Anwendungsgebieten eingesetzt werden.

Beispielsweise können sie als Flockungsmittel bzw. Flockungshilfsmittel zur Sedimentation, Filtration und Flotation, vorzugsweise bei der Wasser- und Prozeßwasser-Aufbereitung oder Abwasserreinigung, bei der Rohstoffgewinnung, insbesondere von Kohle, Aluminium oder Erdöl, oder als Demulgator bei Trennung von öi- und/oder fetthaltigen Wassergemischen sowie besonderes bevorzugt in der Papierindustrie als Hilfsmittel bei der Papierherstellung speziell bei kationischen Papiersuspensionen verwendet werden.

Weiterhin können die Wasser-in-Wasser-Polymerdispersionen in Retentionsmittel-Systemen wie z.B. in Form von Einkomponentensystemen, löslichen Zweikomponentensystemen und Mikropartikelsystemen Anwendung finden. Welches der vorgenannten Systeme hierbei zur Anwendung kommt, ist von verschiedenen Faktoren abhängig, wie z. B. die Faserstoffzusammensetzung und die Füllstoffart, insbesondere aber von der Art und Menge der in der Papiersuspension enthaltenen Störstoffe.

In Einkomponentensystemen als den einfachsten Retentionssystemen bewirkt der Einsatz der erfindungsgemäßen anionischen Wasser-in-Wasser-Polymerdispersionen in kationischen Papiersuspensionen eine Zusammenlagerung der kationischen Feststoffe der Suspension.

Da steigende Einsatzquoten von Altpapier und ein hoher Grad der Schließung der Wasserkreisläufe bei der Papierherstellung eine stetig wachsende Störstofffracht bedingen, die mit Einkomponentensystemen teilweise nicht mehr beherrscht werden kann, ist es bekannt, zwei verschiedene Retentionsmittel als sogenanntes lösliches Zweikompontensystem zu dosieren. Als erste Komponente verwendet man dabei ein niedrigmolekulares Polymer und als zweite Komponente folgt ein hochmolekulares kationisches oder anionisches Polyacrylamid. Weiterhin gibt es Systeme, in dem beide Komponenten als Dualsystem vorher gemischt werden und gemeinsam der Papiersuspension zugegeben werden.

Vorteilhaft können die erfindungsgemäßen Wasser-in-Wasser-Polymerdispersionen nicht nur allein, sondern auch als sogenanntes Dual-System (anionisch / kationische oder kationisch / anionisch) zu solchen Papiersuspensionen dosiert werden. Besonders vorteilhaft ist hierbei, daß die erfindungsgemäßen Wasser-in-Wasser-Polymerdispersionen in einem Produkt für diesen Anwendungszweck maßgeschneidert sein können, so daß das übliche Vermischen der Komponenten für das anzuwendende Dualsystem entfällt.

Hinsichtlich des Einsatzes der erfindungsgemäßen Wasser-in-Wasser-Polymerdispersionen sei erläuternd angefügt, daß Mikropartikelsysteme üblicherweise aus zwei Komponenten bestehen, nämlich einem wasserlöslichen kationischen Polymer und einer kolloidal gelösten oder suspendierten anionischen Mikropartikelkomponente, wobei letztere eine große spezifische Oberfläche hat.

Beim Papierherstellungsprozeß wird dann das kationische Polymer zuerst zugesetzt, beispielsweise unmittelbar vor oder nach der Stoffauflaufpumpe oder vor dem Vertikalsichter. Dies bewirkt eine partielle Belegung der Faser- und Füllstoffoberfläche, wodurch die Gesamtladung durchaus noch negativ sein kann:

Anschließend werden anionische Mikropartikel zugegeben, wobei der Zugabeort möglichst nahe am Stoffauflauf sein soll. Sie reagieren mit den an den Faser- und Füllstoffoberflächen angelagerten kationischen Polymeren und bilden eine Art Brücke. Man erhält eine feine dichte Flocke mit reversiblem Bildungscharakter.

Vorzugsweise können die erfindungsgemäßen anionischen Wasser-in-Wasser-Dispersionen für Papiermaschinen verwendet werden, die zur Herstellung von naßfesten/stark aufgehellten Papierqualitäten bestimmt sind, wie z.B. Laminatpapiere, Etikettenpapiere, aber auch teilweise Tissue-Papiere oder Spezialpapiere (z.B. Banknoten). Vorteilhaft ermöglichen die erfindungsgemäßen Wasser-in-Wasser-Dispersionen, insbesondere hinsichtlich Granulaten, eine bessere Blattformation.

Darüberhinaus ist gefunden worden, daß der Einsatz der erfindungsgemäßen Wasser-in-Wasser-Polymerdispersionen, insbesondere in der Papierindustrie äußerst wirtschaftlich ist. So ergab ein industrieller Großversuch, bei dem die erfindungsgemäßen Wasser-in-Wasser-Polymerdispersionen als Flockungsmittel bei der Herstellung von Etikettenpapieren verwendet wurden, daß bei diesem Versuchseinsatz bei einem

Verbrauch von 60 kg/Tag der anionischen Wasser-in- Wasser-Dispersion der Stoffverlust über den Trichter von 8-10 t/Tag auf < 1 t/Tag gesenkt werden konnte.

Weiterhin sind die erfindungsgemäßen Wasser-in-Wasser-Polymerdispersionen sehr gut zur Behandlung von Streichabwässern geeignet oder können in Kläranlagen von Fabriken mit mehreren Papiermaschinen, welche unterschiedliche Papiersorten fertigen, Anwendung finden.

Darüberhinaus können die erfindungsgemäßen Wasser-in-Wasser-Polymerdispersionen auch in der Rohwasseraufbereitung (Oberflächenwasser) Anwendung finden.

### Methoden

### 1. Bestimmung der Lösungsviskosität

Zur Bestimmung der Lösungsviskosität der erfindungsgemäß hergestellten Wasser-in-Wasser-Dispersionen wird eie 5 %-ige Lösung der Dispersionen hergestellt. Für die Messung werden 340 g der 5 %-igen Lösung benötigt. Hierzu wird die notwendige Menge an vollentsalztem Wasser in einem 400 ml Becherglas vorgelegt. Anschließend wird das vorgelegte Wasser mit einem Fingerrührer so intensiv gerührt, daß sich ein Kegel bildet, der bis zum Boden des Becherglases reicht. Die für die Herstellung der 5 %-igen Lösung notwendige Menge an Wasser-in-Wasser-Dispersion wird mittels einer Einmalspritze in das vorgelegte, gerührte Wasser als Einmaldosis eingespritzt. Die Lösung wird anschließend bei 300 Upm (± 10 Upm) eine Stunde lang gerührt. Nach einer Standzeit von 10 Minuten wird die Brookfield Viskosität mit Hilfe eines Brookfield-Viskosimeter RVT-DV II mit einer Spindel 2 bei Geschwindigkeit 10 bestimmt.

### 2. Bestimmung der Salzviskosität

In einem 400 ml Becherglas werden 289 g vollentsalztes Wasser eingewogen. Anschließend wird das vorgelegte Wasser mit einem Fingerrührer so intensiv gerührt, daß sich ein Kegel bildet, der bis zum Boden des Becherglases reicht. 17 g der erfindungsgemäß hergestellten Wasser-in-Wasser-Dispersion werden mittels einer Einmalspritze als Einmaldosis in das vorgelegte, gerührte Wasser eingespritzt. Nachdem sich die Wasser-in-Wasser-Dispersion gelöst hat, werden 34 g Natriumchlorid (technisch) eingestreut. Nach 16 Minuten Rühren mit 300 Upm (± 10 Upm) wird die Lösung für weitere 10 Minuten stehen gelassen. Anschließend wird die Brookfield Viskosität mit Hilfe eines Brookfield-Viskosimeter RVT-DV II mit Spindel 1 bei Geschwindigkeit 10 bestimmt.

### Beispiele

In den nachfolgenden Beispielen, die die Erfindung lediglich erläutern sollen, wurden die Lösungs- bzw. Salzviskosität, der Flockungswert und die Entwässerungswirkung nach den vorstehend angegebenen Methoden bestimmt. Unter dem Begriff Lösung wird immer eine wässrige Lösung verstanden.

### Allgemeine Verfahrensweise

Zu einer Lösung aus 272,0 g Acrylamid (50-%ig) und 27,4 g Acrylsäure in Wasser werden nach pH-Wert-Einstellung mit einer 25-%igen Ammoniaklösung (bzw. ggf. mit einer 50-%igen Schwefelsäure) 0,5 g Pentanatriumdiethylentriaminpentaacetat (40-%ig), 210,0 g eines Dispergiermittels (37-%ig) und gegebenenfalls Ammoniumsulfat zugegeben. Die Mischung wird in einen 2 Liter Kolben mit Rührapparatur (KPG Rührer) gegeben und auf eine Temperatur von 40°C erwärmt. Nach der Sauerstoffbefreiung durch Durchblasen von Stickstoff wurden 91 ppm eines Azo-Initiators (als 10-%ige Lösung) und 73 ppm eines Oxidationsmittels (als 4-%ige Lösung) zugegeben. Nach Erreichen des Temperaturmaximums T_{Max} gibt man weitere 364 ppm eines Azo-Initiators hinzu und läßt bei dieser Temperatur 15 min nachreagieren. Nach Abkühlung auf Raumtemperatur wird die Mischung mit 100 g Polykaliumacrylat (37-%ig) nachverdünnt.

Der Polymergehalt der Dispersion (15,5 % dispergierte Phase bzw. 10.4 % Dispergiermittel bezogen auf die Gesamtdispersion) wird unabhängig von der Salzkonzentration und Dispergiermittelmenge usw. ggf. durch Anpassung der Wassermenge konstant gehalten.

Alle %-Angaben sind in Gewichtsprozent, bezogen auf die Gesamtdispersion.

Die Produktviskosität 2 nach Lagerung bei Raumtemperatur wird nach einem Tag bestimmt.

Nach 5 Tagen wird der Zustand der W/W-Dispersionen nach Lagerung bei 40°C bewertet.

Versuche, bei denen der Dickpunkt während der Reaktion kritisch für Rührer und Apparatur gewesen ist, wurden vorzeitig abgebrochen.

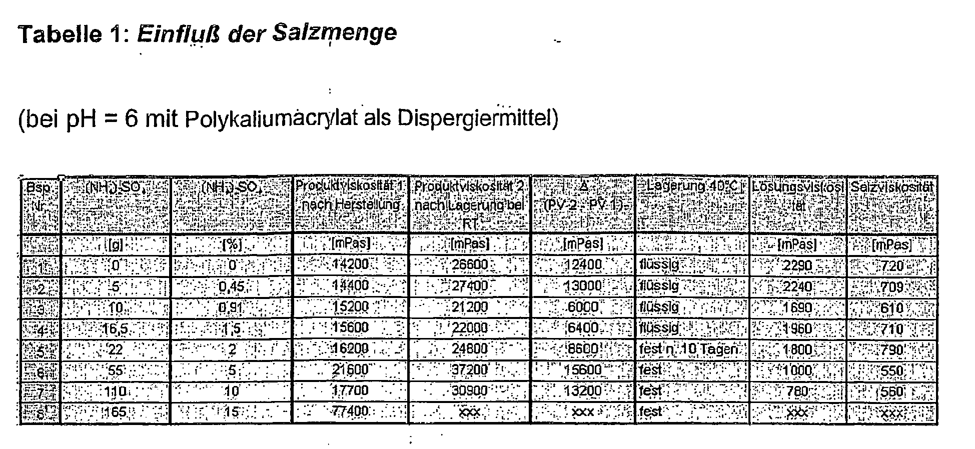

### Ergebnis:

Eine erhöhte Salzkonzentration wirkt sich nicht positiv aus. Bei einer Salzkonzentration von ca. 0.9 bis 1.5 % ist das Nachdickverhalten bei Raumtemperatur (Δ) minimal mit einer insgesamt vergleichsweise niedrigen Produktviskosität. Die Produkte sind auch bei erhöhter Temperatur lagerstabil.

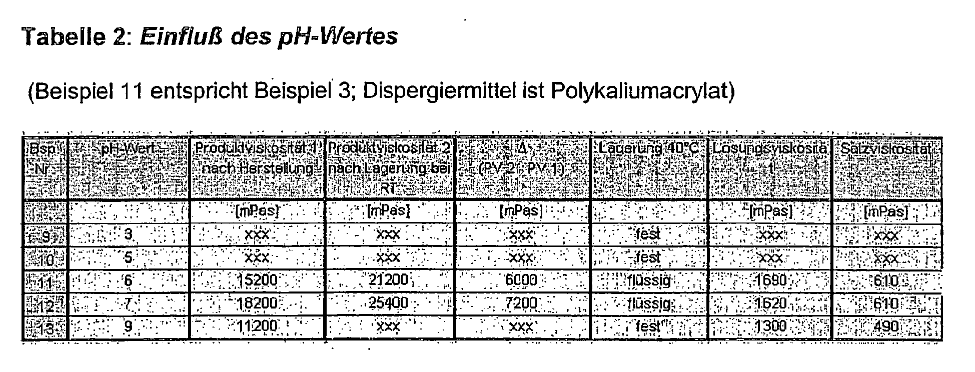

### Ergebnis:

Die Polymerisation sollte in einem pH-Wert Bereich von 6 bis 7 durchgeführt werden.

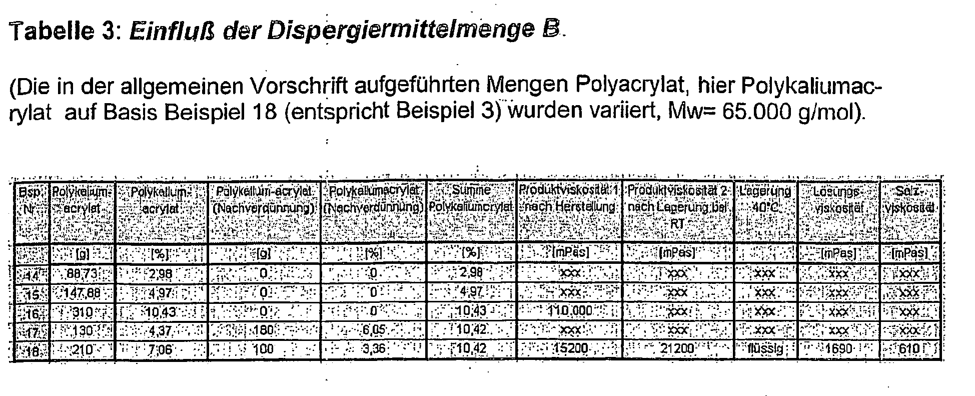

### Ergebnis:

Mengen an Dispergiermittel als Zusatz vor der Polymerisation kleiner als 5 Gew.-% sind nicht ausreichend, selbst wenn nach Beendigung der Polymerisation noch nachverdünnt wird. Die Nachverdünnung (Teilung der Dispergiermittelmenge) ist zwingend notwenig.

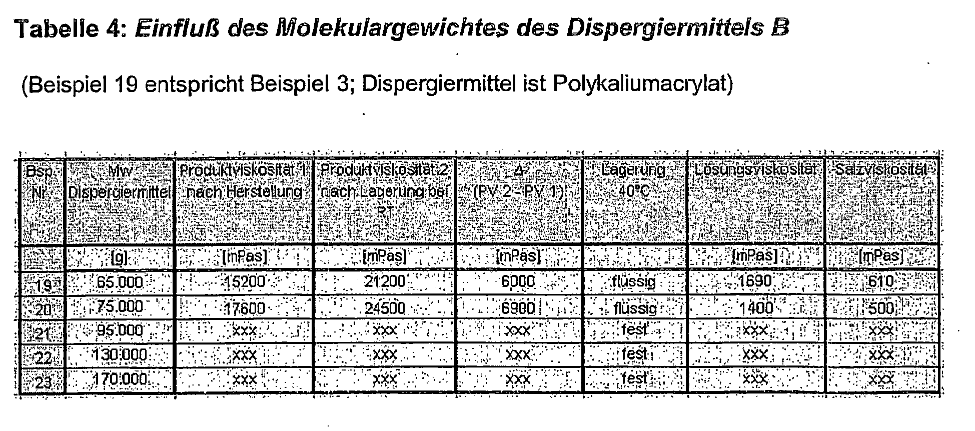

**Ergebnis**: Der optimale Molekulargewichtsbereich für das Dispergiermittel B liegt bei maximal ca. 75.000 g/mol.

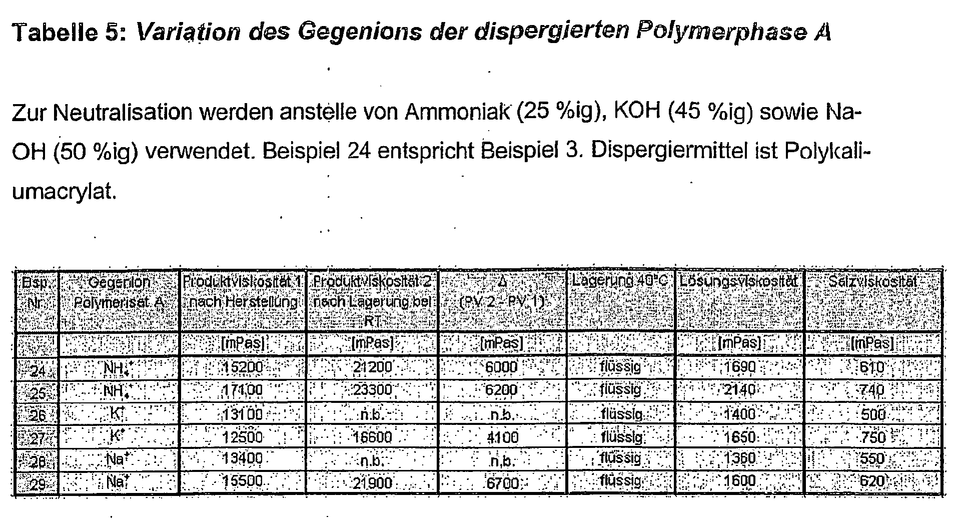

**Ergebnis:** Alle Gegenionen lassen sich für das Polymerisat A verwenden.

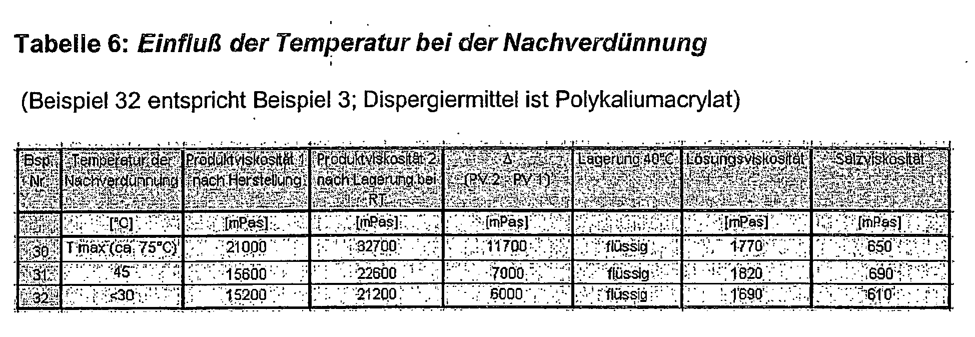

**Ergebnis:** Besonders vorteilhaft findet die Nachverdünnung unterhalb von 30 °C statt.

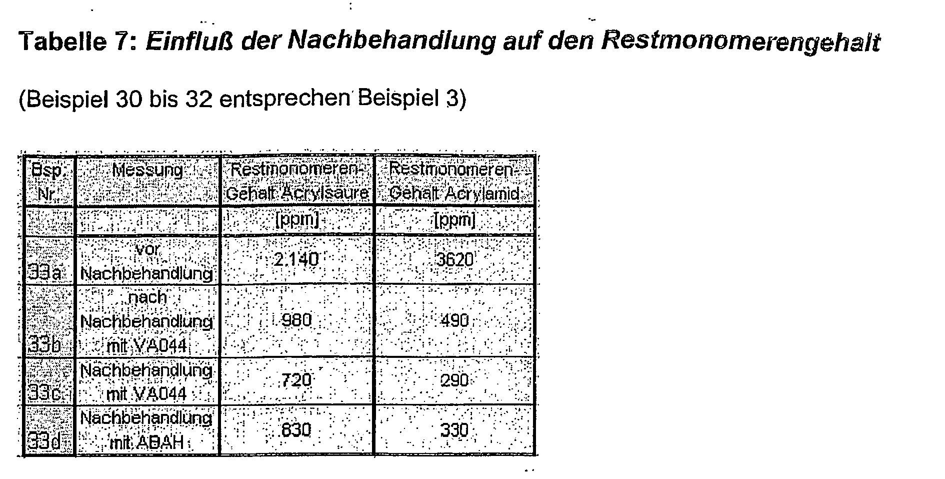

### Ergebnis:

Durch eine Nachbehandlung der Dispersion wird der Restmonomerengehalt deutlich herabgesetzt.

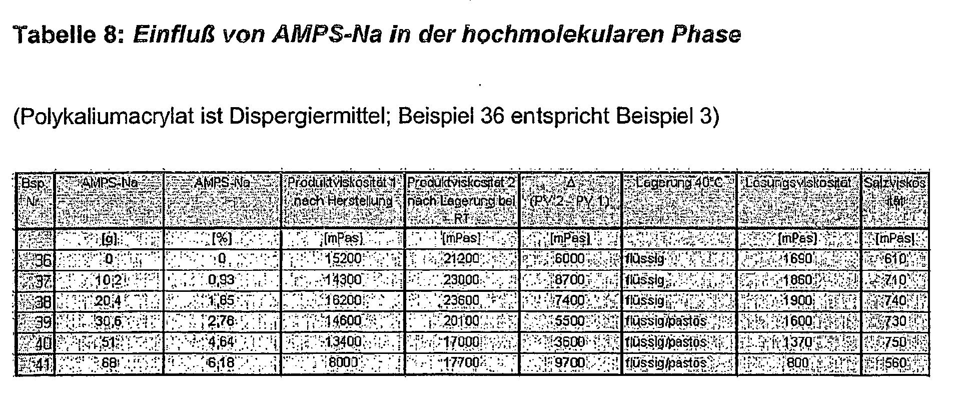

### Ergebnis:

Je höher der Anteil an AMPS-Na in der hochmolekularen Phase ist, desto pastöser wird die Dispersion. AMPS-Mengen größer als 2 Gew.-% führen bei der Lagerung bei höheren Temperaturen zur Nachdickung.

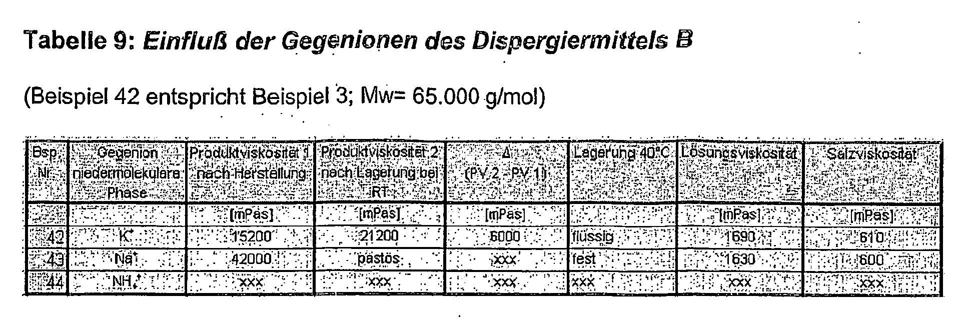

**Ergebnis**: Für das Dispergiermittel B eignet sich das K⁺-Ion am besten als Gegenion.

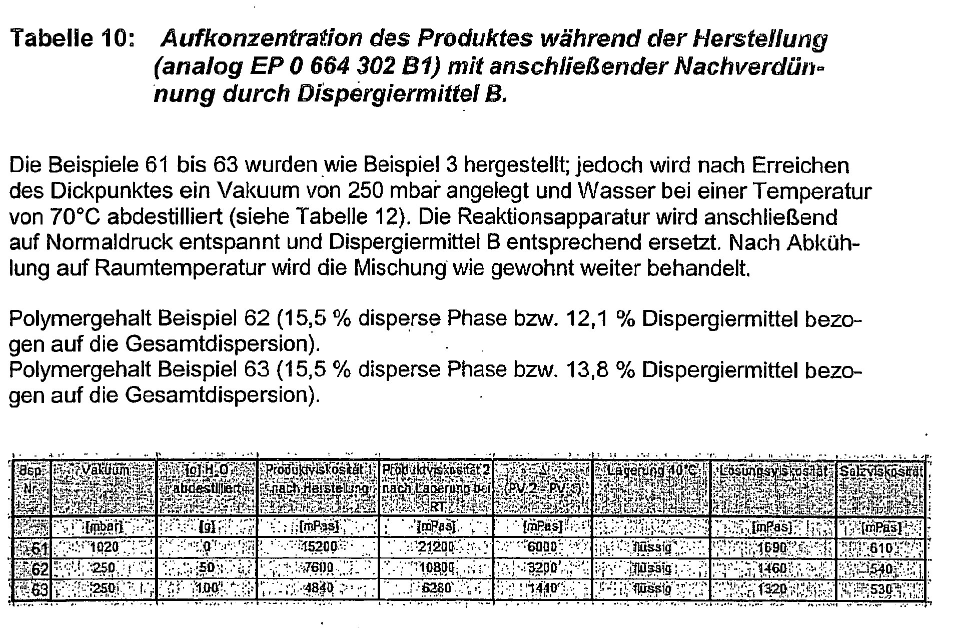

**Ergebnis**: Es ist vorteilhaft, Wasser abzudestillieren und durch Dispergiermittel B zu ersetzen.

## Patentansprüche

1. Verfahren zur Herstellung von anionischen Wasser-in-Wasser-Polymerdispersionen, die wenigstens ein feinverteiltes, hochmolekulares wasserlösliches und/oder wasserquellbares Polymerisat A und eine kontinuierliche wässrige Phase enthalten, wobei diese Phase eine Teilmenge von wenigstens 5 Gew.-%, bezogen auf die Gesamtdispersion, eines niedermolekularen polymeren Dispergiermittels B aufweist;
wobei Monomere bzw. deren wässrige Lösung in einer Menge von 5 bis 30 Gew.-%, bezogen auf die Gesamtlösung bzw. auf die resultierende Gesamtdispersion, in der wässrigen Phase, welche die Teilmenge des polymeren Dispergiermittels B enthält, verteilt und einer radikalischen Polymerisation unterworfen werden: und nach Beendigung der Polymerisation die Reaktionsmischung mit der Restmenge des polymeren Dispergiermittels B nachverdünnt wird,
wobei
- das Polymerisat A ein durchschnittliches Molekulargewicht M_{w} von > 1,0 × 10⁶ g/mol, gemessen nach der GPC-Methode, aufweist; und
- das polymere Dispergiermittel B ein durchschnittliches Molekulargewicht M_{w} von maximal 250.000 g/mol, gemessen nach der GPC-Methode, aufweist;
mit der Maßgabe, dass sofern ein Salz bei der Herstellung der Wasser-in-Wasser-Polymerdispersion zum Einsatz kommt, dieses Salz in Mengen bis zu maximal 3,0 Gew.-%, bezogen auf die Gesamtdispersion, zugesetzt wird.

2. Verfahren nach Anspruch 1, **dadurch gekennzeichnet, dass** das polymere Dispergiermittel B wenigstens eine funktionelle Gruppe ausgewählt aus Ether-, Carboxyl-, Sulfon-, Sulfatester, Amino-, Amido-, Imido-, tert-Amino- und/oder quaternären Ammoniumgruppen aufweist.

3. Verfahren nach Anspruch 2, **dadurch gekennzeichnet, dass** das polymere Dispergiermittel B ein Cellulosederivat, Polyvinylacetat, Stärke, Stärkederivat, Dextran, Polyvinylpyrrolidon, Polyvinylpyridin, Polyethylenimin, Polyamin, Polyvinylimidazol, Polyvinylsuccinimid, Polyvinyl-2-methylsuccinimid, Polyvinyl-1,3-oxazolidon-2, Polyvinyl-2-methylimidazolin und/oder deren jeweiliges Copolymerisat mit Maleinsäure, Maleinsäureanhydrid, Fumarsäure, Itaconsäure, Itaconsäureanhydrid, (Meth)acrylsäure, Salze und/oder Ester der (Meth)acrylsäure und/oder einer (Meth)acrylsäureamid-Verbindung ist.

4. Verfahren nach einem der Ansprüche 1 bis 3, **dadurch gekennzeichnet, dass** das Dispergiermittel B ein anionisches Polymerisat ist, das aus wenigstens 30 Gew.-% anionischen Monomeren aufgebaut ist.

5. Verfahren nach einem der Ansprüche 1 bis 4, **dadurch gekennzeichnet, dass** die Teilmenge des Dispergiermittels B in der wässrigen Phase 60 bis 95 Gew.-%, bezogen auf die Gesamtmenge des Dispergiermittels B, beträgt.

6. Verfahren nach einem der Ansprüche 1 bis 5, **dadurch gekennzeichnet, dass** wenigstens ein wasserlösliches, polymeres Dispergiermittel B zusammen mit mindestens einem wasserlöslichen polyfunktionellen Alkohol und/oder dessen Umsetzungsprodukt mit Fettaminen eingesetzt wird.

7. Verfahren nach Anspruch 6, **dadurch gekennzeichnet, dass** als wasserlösliche polyfunktionelle Alkohole Polyalkylenglykole, Blockcopolymere von Propylen/ Ethylenoxid mit Molekulargewichten von 50 bis 50 000, niedermolekulare polyfunktionelle Alkohole und/oder deren Umsetzungsprodukten mit Fettaminen mit C₆-C₂₂ im Alkyl- oder Alkylenrest eingesetzt werden.

8. Verfahren nach einem der Ansprüche 6 bis 7, **dadurch gekennzeichnet, dass** das polymere Dispergiermittel B zusammen mit mindestens einem polyfunktionellen Alkohol in Mengen von 5 bis 50 Gew.-%, bezogen auf die Gesamtdispersion, eingesetzt wird.

9. Verfahren nach einem der Ansprüche 6 bis 8, **dadurch gekennzeichnet, dass** das Gewichtsverhältnis des polymeren Dispergiermittels B zu dem polyfunktionellen Alkohol im Bereich von 1,00 : 0,01 bis 1,00 : 0,5 liegt.

10. Verfahren nach einem der Ansprüche 1 bis 9, **dadurch gekennzeichnet, dass** das Polymerisat A aus anionischen, nichtionischen, amphiphilen und/oder kationischen Monomeren aufgebaut ist.

11. Verfahren nach einem der Ansprüche 1 bis 10, **dadurch gekennzeichnet, dass** als anionische Monomere
a.) olefinisch ungesättigte Carbonsäuren, Carbonsäureanhydride, und die wasserlöslichen Alkali-, Erdalkali- und Ammoniumsalze derselben
b.) olefinisch ungesättigte Sulfonsäuren und/oder die wasserlöslichen Alkali-, Erdalkali-, und Ammoniumsalze derselben
c.) olefinisch ungesättigte Phosphonsäuren und/oder die wasserlöslichen Alkali-, Erdalkali- und Ammoniumsalze derselben
d.) sulfomethylierte und/oder phosphonomethylierte Acrylamide und/oder die wasserlöslichen Alkali-, Erdalkali- und Ammoniumsalze derselben
verwendet werden.

12. Verfahren nach einem der Ansprüchen 1 bis 11, **dadurch gekennzeichnet, dass** als
nichtionische Monomere, Monomere der allgemeinen Formel (I) 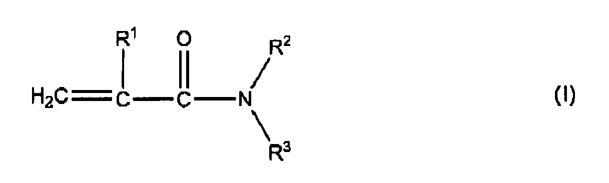 in der
R¹ für einen Wasserstoff oder einen Methylrest, und
R² und R³ unabhängig voneinander, für Wasserstoff, für einen Alkyl- oder Hydroxyalkyl-Rest mit 1 bis 5 C-Atomen
R² oder R³ für eine OH-Gruppe
stehen, eingesetzt werden.

13. Verfahren nach einem der Ansprüche 1 bis 12, **dadurch gekennzeichnet, dass** als
amphiphile Monomere, Monomere der allgemeinen Formel (II) oder (III) 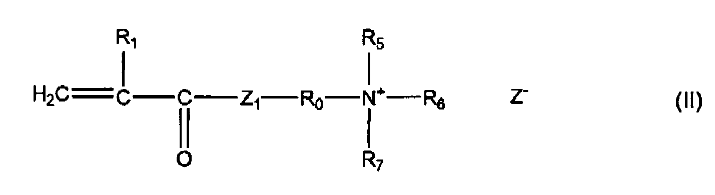 wobei
Z₁ für O, NH, NR₄ mit R₄ für Alkyl mit 1 bis 4 Kohlenstoffatomen,
R₁ für Wasserstoff oder einen Methylrest,
R₀ für Alkylen mit 1 bis 6 Kohlenstoffatomen,
R₅ und R₆ unabhängig voneinander, für einen Alkylrest mit 1 bis 6 Kohlenstoffatomen,
R₇ für einen Alkyl, Aryl- und/oder Aralkyl-Rest mit 8 bis 32 Kohlenstoffatomen und
Z⁻ für Halogen, Pseudohalogen, SO₄CH₃⁻ oder Acetat stehen oder 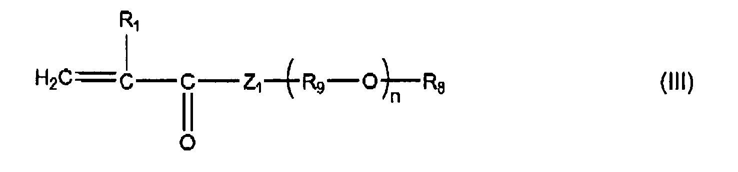 wobei
Z₁ für O, NH, NR₄ mit R₄ für Alkyl mit 1 bis 4 Kohlenstoffatomen,
R₁ für Wasserstoff oder einen Methylrest,
R₈ für Wasserstoff, einen Alkyl-, Aryl- und/oder Aralkyl-Rest mit 8 bis 32 Kohlenstoffatomen,
R₉ für einen Alkylenrest mit 2 bis 6 Kohlenstoffatomen,
n für eine ganze Zahl von 1 bis 50
stehen, eingesetzt werden.

14. Verfahren nach einem der Ansprüche 1 bis 13, **dadurch gekennzeichnet, dass** als
kationische Monomere Verbindungen der allgemeinen Formel (IV) 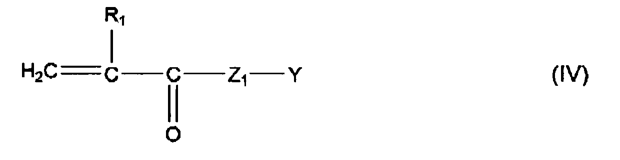 in der
R₁ für Wasserstoff oder einen Methylrest,
Z₁ für O, NH oder NR₄ mit R₄ für einen Alkylrest mit 1 bis 4 C-Atomen, Y für eine der Gruppen 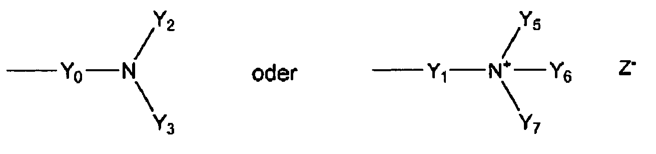 stehen, wobei Y₀ und Y₁ für einen Alkylenrest oder Hydroxyalkylenrest mit 2 bis 6 C-Atomen, Y₂, Y₃, Y₅, Y₆, Y₇, unabhängig voneinander, jeweils für einen Alkylrest mit 1 bis 6 C-Atomen,
Z- für Halogen, Acetat, SO₄CH₃⁻ stehen,
eingesetzt werden.

15. Verfahren nach einem der Ansprüche 1 bis 14, **dadurch gekennzeichnet, dass** die Monomerzusammensetzung zur Herstellung des Polymerisates A zu 0 bis 100 Gew.-% aus anionischen Monomeren, bezogen auf die Gesamtmenge an Monomeren, besteht.

16. Verfahren nach einem der Ansprüche 1 bis 15, **dadurch gekennzeichnet, dass** die Polymerisation in Gegenwart eines Salzes in einer Menge bis maximal 3,0 Gew.-%, bezogen auf die Gesamtdispersion, durchgeführt wird.

17. Verfahren nach einem der Ansprüche 1 bis 16, **dadurch gekennzeichnet, dass** die Reaktionsmischung nach der Polymerisation abgekühlt und mit der Restmenge des Dispergiermittels B nachverdünnt wird.

18. Verfahren nach einem der Ansprüche 1 bis 17, **dadurch gekennzeichnet, dass** die Reaktionsmischung auf ≤ 35 °C abgekühlt wird.

19. Verfahren nach einem der Ansprüche 1 bis 18, **dadurch gekennzeichnet, dass** die Reaktionsmischung mit 5 bis 50 Gew.-%, bezogen auf die Gesamtmenge des Dispergiermittels B, nachverdünnt wird.

20. Anionische Wasser-in-Wasser Polymerdispersion, die wenigstens ein feinverteiltes, hochmolekulares wasserlösliches und/oder wasserquellbares Polymerisat A und eine kontinuierliche wässrige Phase enthält, wobei die anionische Wasser-in-Wasser-Polymerdispersion eine Gesamtmenge von wenigstens 5 Gew.-%, bezogen auf die Gesamtdispersion, eines niedermolekularen polymeren Dispergiermittels B aufweist, und ggf. ein Salz in Mengen bis zu maximal 3,0 Gew.-%, bezogen auf die Gesamtdispersion;
wobei
- das Polymerisat A ein durchschnittliches Molekulargewicht M_{w} von > 1,0 × 10⁶ g/mol, gemessen nach der GPC-Methode, aufweist; und
- das polymere Dispergiermittel B ein durchschnittliches Molekulargewicht M_{w} von maximal 250.000 g/mol, gemessen nach der GPC-Methode, aufweist;
erhältlich nach einem oder mehreren der Ansprüche 1 bis 19.

21. Verwendung der Wasser-in-Wasser-Polymerdispersion nach Anspruch 20 in der Fest-Flüssigtrennung in wässrigen Systemen.

22. Verwendung der Wasser-in-Wasser-Polymerdispersionen nach Anspruch 20 als Hilfsmittel bei der Papierherstellung.

23. Verwendung der Wasser-in-Wasser-Polymerdispersion nach Anspruch 20 in Retentionsmittel-Systemen bei der Papierherstellung.

## Claims

1. A process for the production of anionic water-in-water polymeric dispersions comprising at least one finely dispersed, high-molecular weight, water-soluble and/or water-swellable polymer A and a continuous aqueous phase, which phase contains an aliquot of at least 5% by weight, based on the total dispersion, of a low-molecular weight polymeric dispersing agent B; in which monomers or their aqueous solution are distributed in an amount of 5% to 30% by weight, based on the total solution and/or the resulting total dispersion, in the aqueous phase containing the aliquot of the polymeric dispersing agent B and subjected therein to free-radical polymerization and, on completion of said polymerization, the reaction mixture is subsequently diluted with the residual amount of the polymeric dispersing agent B,
wherein
- the polymer A has an average molecular weight M_{w} of > 1.0 × 10⁶ g/mol, as measured by the GPC method, and
- the polymeric dispersing agent B has an average molecular weight M_{w} of not more than 250 000 g/mol, as measured by the GPC method;
with the proviso that, when a salt is used in the production of the water-in-water polymeric dispersion, this salt is added in amounts up to not more than 3.0% by weight, based on the total dispersion.

2. A process as defined in claim 1, **characterized in that** said polymeric dispersing agent B comprises at least one functional group selected from ether groups, carboxyl groups, sulfone groups, sulfate ester groups, amino groups, amido groups, imido groups, tert-amino groups, and/or quaternary ammonium groups.

3. A process as defined in claim 2, **characterized in that** said polymeric dispersing agent B is a cellulose derivative, polyvinyl acetate, starch, a starch derivative, dextran, polyvinylpyrrolidone, polyvinylpyridine, polyethylene imine, polyamine, polyvinylimidazole, polyvinylsuccinimide, polyvinyl-2-methylsuccinimide, polyvinyl-1,3-oxazolid-2-one, polyvinyl-2-methylimidazoline, and/or the respective copolymers thereof with maleic acid, maleic anhydride, fumaric acid, itaconic acid, itaconic anhydride, (meth)acrylic acid, salts and/or esters of (meth)acrylic acid and/or a (meth)acrylamide compound.

4. A process as defined in any of claims 1 to 3, **characterized in that** said dispersing agent B is an anionic polymer composed of at least 30% by weight of anionic monomers.

5. A process as defined in any of claims 1 to 4, **characterized in that** the aliquot of said dispersing agent B in the aqueous phase is equal to from 60 to 95% by weight of the total weight of said dispersing agent B.

6. A process as defined in any of claims 1 to 5, **characterized in that** at least one water-soluble polymeric dispersing agent B is used together with at least one water-soluble polyfunctional alcohol and/or its reaction product with fatty amines.

7. A process as defined in claim 6, **characterized in that** the water-soluble polyfunctional alcohols used are polyalkylene glycols, block copolymers of propylene/ethylene oxide having molecular weights of from 50 to 50 000, low-molecular weight polyfunctional alcohols and/or their reaction products with fatty amines containing from 6 to 22 carbons in the alkyl or alkylene radical.

8. A process as defined in either of claims 6 and 7, **characterized in that** said polymeric dispersing agent B is used together with at least one polyfunctional alcohol in amounts of from 5 to 50% by weight, based on the total dispersion.

9. A process as defined in any of claims 6 to 8, **characterized in that** the ratio, by weight, of said polymeric dispersing agent B to said polyfunctional alcohol is in the range of from 1.00:0.01 to 1.00:0.5.

10. A process as defined in any of claims 1 to 9, **characterized in that** polymer A is composed of anionic, non-ionic, amphiphilic, and/or cationic monomers.

11. A process as defined in any of claims 1 to 10, **characterized in that** the anionic monomers used are
a.) olefinically unsaturated carboxylic acids, carboxylic anhydrides, and water-soluble alkali metal salts, alkaline earth metal salts, and ammonium salts thereof,
b.) olefinically unsaturated sulfonic acids and/or said water-soluble alkali metal salts, alkaline earth metal salts, and ammonium salts thereof,
c.) olefinically unsaturated phosphonic acids and/or said water-soluble alkali metal salts, alkaline earth metal salts, and ammonium salts thereof, and
d.) sulfomethylated and/or phosphonomethylated acrylamides and/or said water-soluble alkali metal salts, alkaline earth metal salts, and ammonium salts thereof.

12. A process as defined in any of claims 1 to 11, **characterized in that** the non-ionic monomers used are monomers of the general formula (I) 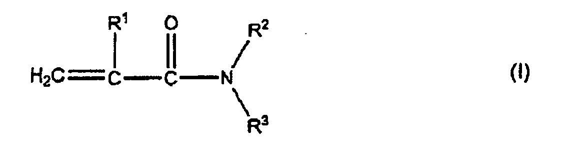 in which
R¹ stands for a hydrogen or a methyl radical, and R² and R³ independently stand for hydrogen, or an alkyl or hydroxyalkyl radical containing from 1 to 5 carbon atoms, and
R² or R³ stands for an OH group.

13. A process as defined in any of claims 1 to 12, **characterized in that** the amphiphilic monomers used are monomers of the general formula (II) or (III) 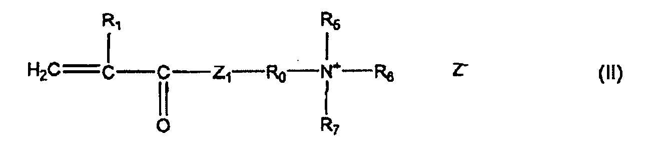 wherein Z₁ stands for O, NH, NR₄ wherein R₄ denotes alkyl containing from 1 to 4 carbon atoms,
R₁ stands for hydrogen or a methyl radical,
R₀ stands for alkylene containing from 1 to 6 carbon atoms,
R₅ and R₆ independently stand for an alkyl radical containing from 1 to 6 carbon atoms,
R₇ stands for an alkyl radical, an aryl radical, and/or an aralkyl radical containing from 8 to 32 carbon atoms and
Z⁻ stands for halogen, pseudo-halogen, SO₄CH₃⁻ or acetate, or 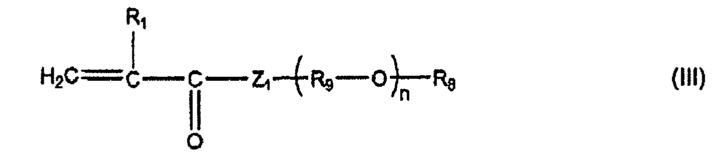 wherein Z₁ stands for 0, NH, or NR₄, wherein R₄ denotes alkyl containing from 1 to 4 carbon atoms, R₁ stands for hydrogen or a methyl radical,
R₈ stands for hydrogen, an alkyl radical, an aryl radical, and/or an aralkyl radical containing from 8 to 32 carbon atoms,
R₉ stands for an alkylene radical containing from 2 to 6 carbon atoms, and
n stands for an integer from 1 to 50.

14. A process as defined in any of claims 1 to 13, **characterized in that** the cationic monomers used are compounds of the general formula (IV) 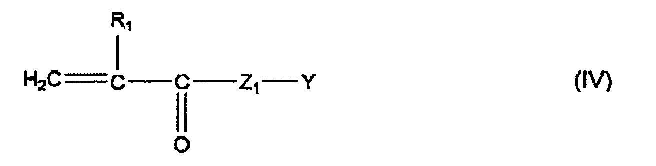 wherein R₁ stands for hydrogen or a methyl radical, Z₁ stands for O, NH or NR₄ where R₄ stands for an alkyl radical containing 1 to 4 carbon atoms,
Y stands for one of the groups 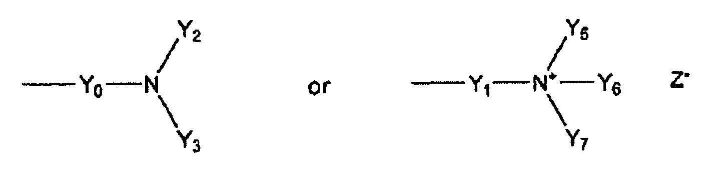 wherein Y₀ and Y₁ stand for an alkylene radical or hydroxyalkylene radical containing 2 to 6 carbon atoms,
Y₂, Y₃, Y₅, Y₆, Y₇, independently stand for an alkyl radical containing 1 to 6 carbon atoms, and
Z⁻ stands for halogen, acetate, or SO₄CH₃⁻.

15. A process as defined in any of claims 1 to 14, **characterized in that** the monomeric composition to be used for the production of said polymer A consists of anionic monomers, to an extent of from 0 to 100% by weight, based on the total weight of monomers.

16. A process as defined in any of claims 1 to 15, **characterized in that** polymerization is carried out in the presence of a salt in an amount of not more than 3.0% by weight, based on the total dispersion.

17. A process as defined in any of claims 1 to 16, **characterized in that** the reaction mixture is cooled following polymerization and is subsequently diluted with the residual amount of said dispersing agent B.

18. A process as defined in any of claims 1 to 17, **characterized in that** the reaction mixture is cooled to ≤ 35°C.

19. A process as defined in any of claims 1 to 18, **characterized in that** the reaction mixture is subsequently diluted with from 5 to 50% of said dispersing agent B by weight, based on the total weight thereof.

20. An anionic water-in-water polymeric dispersion comprising at least one finely dispersed, high-molecular weight water-soluble and/or water-swellable polymer A and a continuous aqueous phase, wherein the anionic water-in-water polymer dispersion includes a total amount of at least 5% by weight, based on the total dispersion, of a low-molecular weight polymeric dispersing agent B, and optionally a salt in amounts up to not more than 3.0% by weight, based on the total dispersion;
wherein
- the polymer A has an average molecular weight M_{w} of > 1.0 × 10⁶ g/mol, as measured by the GPC method, and
- the polymeric dispersing agent B has an average molecular weight M_{w} of not more than 250 000 g/mol, as measured by the GPC method;
obtainable according to one or more of claims 1 to 19.

21. The use of water-in-water polymer dispersion as defined in claim 20 for solid/liquid separation in aqueous systems.

22. The use of the water-in-water polymeric dispersions as defined in claim 20 as an auxiliary in papermaking.

23. The use of the water-in-water polymer dispersion as defined in claim 20 in retention agent systems in papermaking.

## Revendications

1. Procédé pour la préparation de dispersions eau-dans-eau de polymères anioniques, qui contiennent au moins un polymérisat A de masse moléculaire élevée, soluble dans l'eau et/ou apte à gonfler dans l'eau, finement divisé, et une phase aqueuse continue, cette phase comportant une quantité partielle d'au moins 5 % en poids, par rapport à la dispersion totale, d'un dispersant polymère B de faible masse moléculaire ;
les monomères ou leur solution aqueuse étant dispersés en une quantité de 5 à 30 % en poids, par rapport à la solution totale ou à la dispersion totale résultante, dans la phase aqueuse qui contient la quantité partielle du dispersant polymère B, et soumis à une polymérisation radicalaire ; et après la fin de la polymérisation le mélange réactionnel étant ensuite dilué avec la quantité restante du dispersant polymère B,
dans lequel
- le polymérisat A présente une masse moléculaire moyenne M_{w} de > 1,0 × 10⁶ g/mole, mesurée selon la méthode GPC ; et
- le dispersant polymère B présente une masse moléculaire moyenne M_{w} d'au maximum 250 000 g/mole, mesurée selon la méthode GPC ;
étant entendu que lorsque dans la préparation de la dispersion eau-dans-eau de polymère on utilise un sel, on ajoute ce sel en quantités d'au maximum 3,0 % en poids, par rapport à la dispersion totale.

2. Procédé selon la revendication 1, **caractérisé en ce que** le dispersant polymère B comprend au moins un groupe fonctionnel choisi parmi des groupes éther, carboxy, sulfone, ester sulfate, amino, amido, imido, tert-amino et/ou ammonium quaternaire.

3. Procédé selon la revendication 2, **caractérisé en ce que** le dispersant polymère B est un dérivé de cellulose, le poly(acétate de vinyle), l'amidon, un dérivé d'amidon, le dextrane, la polyvinylpyrrolidone, la polyvinylpyridine, une polyéthylène-imine, une polyamine, le polyvinylimidazole, le polyvinylsuccinimide, le polyvinyl-2-méthylsuccinimide, la polyvinyl-1,3-oxazolidone-2, la polyvinyl-2-méthylimidazoline et/ou leur copolymérisat respectif avec l'acide maléique, l'anhydride maléique, l'acide fumarique, l'acide itaconique, l'anhydride itaconique, l'acide (méth)acrylique, les sels et/ou esters de l'acide (méth)acrylique et/ou un composé de (méth)acrylamide.

4. Procédé selon l'une quelconque des revendications 1 à 3, **caractérisé en ce que** le dispersant B est un polymérisat anionique qui est constitué d'au moins 30 % en poids de monomères anioniques.

5. Procédé selon l'une quelconque des revendications 1 à 4, **caractérisé en ce que** la quantité partielle du dispersant B dans la phase aqueuse est de 60 à 95 % en poids, par rapport à la quantité totale du dispersant B.

6. Procédé selon l'une quelconque des revendications 1 à 5, **caractérisé en ce qu'**on utilise au moins un dispersant polymère B hydrosoluble conjointement avec au moins un alcool polyfonctionnel hydrosoluble et/ou son produit de réaction avec des amines grasses.

7. Procédé selon la revendication 6, **caractérisé en ce qu'**on utilise comme alcools polyfonctionnels hydrosolubles des polyalkylèneglycols, des copolymères séquencés d'oxyde d'éthylène/propylène à masses moléculaires de 50 à 50 000, des alcools polyfonctionnels de faible masse moléculaire et/ou leurs produits de réaction avec des amines grasses à radical alkyle ou alkylène en C₆-C₂₂.

8. Procédé selon l'une quelconque des revendications 6 et 7, **caractérisé en ce qu'**on utilise le dispersant polymère B conjointement avec au moins un alcool polyfonctionnel en quantités de 5 à 50 % en poids, par rapport à la dispersion totale.

9. Procédé selon l'une quelconque des revendications 6 à 8, **caractérisé en ce que** le rapport pondéral du dispersant polymère B à l'alcool polyfonctionnel se situe dans la plage allant de 1,00 : 0,01 à 1,00 : 0,5.

10. Procédé selon l'une quelconque des revendications 1 à 9, **caractérisé en ce que** le polymérisat A est constitué de monomères anioniques, non ioniques, amphiphiles et/ou cationiques.

11. Procédé selon l'une quelconque des revendications 1 à 10, **caractérisé en ce qu'**on utilise comme monomères anioniques
a.) des acides carboxyliques, anhydrides d'acides carboxyliques, à insaturation oléfinique, et les sels hydrosolubles de métaux alcalins, de métaux alcalino-terreux et d'ammonium de ceux-ci
b.) des acides sulfoniques à insaturation oléfinique et/ou les sels hydrosolubles de métaux alcalins, de métaux alcalino-terreux et d'ammonium de ceux-ci
c.) des acides phosphoniques à insaturation oléfinique et/ou les sels hydrosolubles de métaux alcalins, de métaux alcalino-terreux et d'ammonium de ceux-ci
d.) des acrylamides sulfométhylés et/ou phosphonométhylés et/ou les sels hydrosolubles de métaux alcalins, de métaux alcalino-terreux et d'ammonium de ceux-ci.

12. Procédé selon l'une quelconque des revendications 1 à 11, **caractérisé en ce qu'**on utilise comme monomères non ioniques des monomères de formule générale (I) 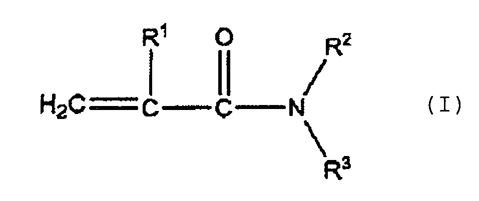 dans laquelle
R¹ représente un atome d'hydrogène ou un radical méthyle, et
R² et R³ représentent, indépendamment l'un de l'autre, un atome d'hydrogène, un radical alkyle ou hydroxyalkyle ayant de 1 à 5 atomes de carbone R² ou R³ représente un groupe OH.

13. Procédé selon l'une quelconque des revendications 1 à 12, **caractérisé en ce qu'**on utilise comme monomères amphiphiles des monomères de formule générale (II) ou (III) 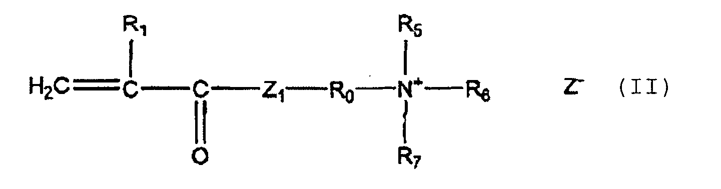 dans laquelle
Z₁ représente O, NH, NR₄ où R₄ représente un groupe alkyle ayant de 1 à 4 atomes de carbone,
R₁ représente un atome d'hydrogène ou un radical méthyle,
R₀ représente un groupe alkylène ayant de 1 à 6 atomes de carbone,
R₅ et R₆ représentent, indépendamment l'un de l'autre, un radical alkyle ayant de 1 à 6 atomes de carbone,
R₇ représente un radical alkyle, aryle et/ou aralkyle ayant de 8 à 32 atomes de carbone et
Z⁻ représente un atome d'halogène, de pseudo-halogène, SO₄CH₃⁻ ou acétate ou 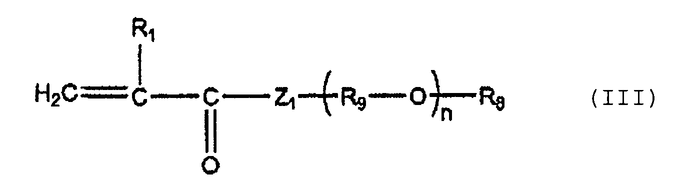 Z₁ représentant O, NH, NR₄ où R₄ représente un groupe alkyle ayant de 1 à 4 atomes de carbone,
R₁ représentant un atome d'hydrogène ou un radical méthyle,
R₈ représentant un atome d'hydrogène, un radical alkyle, aryle et/ou aralkyle ayant de 8 à 32 atomes de carbone,
R₉ représentant un radical alkylène ayant de 2 à 6 atomes de carbone,
n représentant un nombre entier valant de 1 à 50.

14. Procédé selon l'une quelconque des revendications 1 à 13, **caractérisé en ce qu'**on utilise comme monomères cationiques des composés de formule générale (IV) 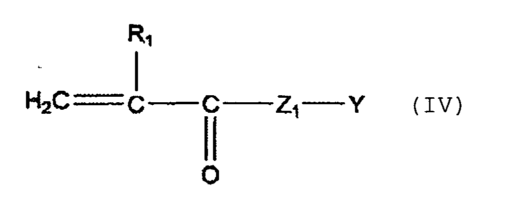 dans laquelle
R₁ représente un atome d'hydrogène ou un radical méthyle,
Z₁ représente O, NH ou NR₄ où R₄ représente un radical alkyle ayant de 1 à 4 atomes de carbone,
Y représente l'un des groupes 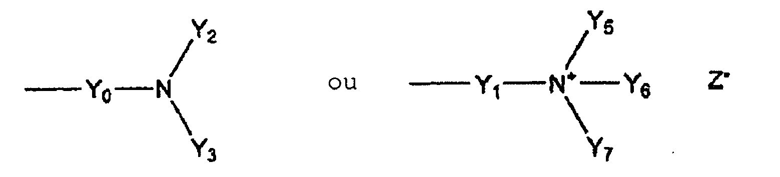 Y₀ et Y₁ représentant un radical alkylène ou un radical hydroxyalkylène ayant de 2 à 6 atomes de carbone, Y₂, Y₃, Y₅, Y₆, Y₇ représentant chacun, indépendamment les uns des autres, un radical alkyle ayant de 1 à 6 atomes de carbone,
Z⁻ représentant un atome d'halogène, un ion acétate, SO₄CH₃⁻.

15. Procédé selon l'une quelconque des revendications 1 à 14, **caractérisé en ce que** la composition de monomères pour la préparation du polymérisat A consiste à raison de 0 à 100 % en poids en monomères anioniques, par rapport à la quantité totale des monomères.

16. Procédé selon l'une quelconque des revendications 1 à 15, **caractérisé en ce que** la polymérisation est effectuée en présence d'un sel en une quantité d'au maximum 3,0 % en poids, par rapport à la dispersion totale.

17. Procédé selon l'une quelconque des revendications 1 à 16, **caractérisé en ce qu'**après la polymérisation on refroidit le mélange réactionnel et ensuite on le dilue avec la quantité restante du dispersant B.

18. Procédé selon l'une quelconque des revendications 1 à 17, **caractérisé en ce qu'**on refroidit le mélange réactionnel jusqu'à ≤ 35 °C.

19. Procédé selon l'une quelconque des revendications 1 à 18, **caractérisé en ce qu'**on dilue ensuite le mélange réactionnel avec 5 à 50 % en poids, par rapport à la quantité totale du dispersant B.

20. Dispersion eau-dans-eau de polymère anionique, qui contient au moins un polymérisat A de masse moléculaire élevée, soluble dans l'eau et/ou apte à gonfler dans l'eau, finement divisé, et une phase aqueuse continue, la dispersion eau-dans-eau de polymère anionique comportant une quantité totale d'au moins 5 % en poids, par rapport à la dispersion totale, d'un dispersant polymère B de faible masse moléculaire, et éventuellement un sel en quantités allant au maximum jusqu'à 3,0 % en poids, par rapport à la dispersion totale ;
- le polymérisat A présentant une masse moléculaire moyenne M_{w} de > 1,0 × 10⁶ g/mole, mesurée selon la méthode GPC ; et
- le dispersant polymère B présentant une masse moléculaire moyenne M_{w} d'au maximum 250 000 g/mole, mesurée selon la méthode GPC ;
pouvant être obtenue selon une ou plusieurs des revendications 1 à 19.

21. Utilisation de la dispersion eau-dans-eau de polymère selon la revendication 20, dans la séparation liquide-solide dans des systèmes aqueux.

22. Utilisation de la dispersion eau-dans-eau de polymère selon la revendication 20, en tant qu'adjuvant dans la fabrication du papier.

23. Utilisation de la dispersion eau-dans-eau de polymère selon la revendication 20, dans des systèmes de rétention dans la fabrication du papier.
